# EUROPEAN PATENT SPECIFICATION

(11) **EP 3 894 159 B1**
(45) Date of publication and mention of the grant of the patent: **06.09.2023**
(21) Application number: 19835493.8
(22) Date of filing: 12.12.2019
(51) Int. Cl.: B29B 7/82, B29B 7/28, B29B 7/72, B29B 7/94, B29C 48/285, B29C 48/92, B01F 23/00, B29B 7/24, B29B 7/60, B29C 48/29, B29C 48/79

(54) **PLANT FOR TREATMENT OF POLYMERIC MATERIALS**
VORRICHTUNG ZUR VERARBEITUNG VON POLYMEREN MATERIALIEN
DISPOSITIF POUR LE TRAITEMENT DE MATÉRIAUX POLYMÈRES

(30) Priority: 12.12.2018 IT 201800011011
(43) Date of publication of application: 20.10.2021
(73) Proprietor: Pegaso Industries S.p.A., 35010 Borgoricco (PD) (IT)
(72) Inventor: PIVA, Rinaldo, 35010 Borgoricco (PD) (IT)
(74) Representative: Susanetto, Carlo
(86) International application number: PCT/IB2019/060696
(87) International publication number: WO 2020/121237

(56) References cited:
- EP-A2- 0 223 519
- EP-B1- 0 010 743
- GB-A- 1 405 020
- GB-A- 2 053 741
- US-A- 2 958 516
- US-A1- 2004 048 953
- US-A1- 2007 248 748

## Description

### Technical field

The present invention relates to a plant for transformation of plastics material which is provided with a transformation machine, comprising a hopper for supplying the plastics material to the transformation machine and a device for metering liquid additives to the plastics material being supplied to the transformation machine.

### Technological background

The most widely known and used techniques for transforming plastics material comprise the technique of extrusion and the technique of moulding. The moulding technique can be applied in one of the various forms thereof, such as, for example, injection-moulding, compression moulding, injection blow-moulding or extrusion blow-moulding.

The moulding technique, in the various forms thereof, provides for the polymer material to be introduced in the molten or semi-molten state inside a mould, the internal cavity of which reproduces the shape of the desired object so that the polymer material, once it has been brought to the solid state, assumes the formation thereof.

Similarly, the extrusion technique provides for the polymer material to be urged in the molten or semi-molten state through one or more through-cavities which are formed in an appropriate extrusion head, the internal profile of which reproduces the section of the desired object, so that the polymer material, once it has been brought to the solid state, assumes the shape thereof.

In general terms, these techniques provide for charging the polymer material which is intended to be transformed in one or more hoppers, from which it is then transferred, for example, by falling, into a moulding apparatus or extrusion apparatus which provides for it to be introduced into the mould or to be urged through the head, respectively, under suitable temperature and pressure conditions.

The polymer material charged in the hopper and then supplied to the moulding or extrusion apparatus is formed by a plurality of solid elements which are distinct and separate from each other and which have suitable dimensions and shape in accordance with the processing to be carried out and the polymer material used.

This plurality of solid elements is generally indicated using the term "loose material" (or, the term commonly used in the field, "bulk material") and comprises polymer material in the form of granules or in powdered form or in flakes.

In the techniques for transforming plastics materials cited briefly above, it is known to add any additives during the step of supplying the polymer material to the transformation machine, generally immediately upstream of the extruder or the mould.

In particular, there can be added to the polymer material which is discharged from the feeding hopper and which is introduced into the transformation machine, additives in the liquid phase, such as, for example, a dye compound, which is intended to confer on the final product the desired colour.

The dye is generally contained in a dedicated container from which it is taken and added to the polymer material which is being introduced into the transformation machine by means of a metering pump.

The quantity of dye which has to be added to the polymer material is generally less than 1% with respect to the quantity of polymer material, typically in the order of several tenths of a percent. For example, the weight fraction of dye may be between 0.5% and 1%.

The degree of precision required in the quantity of dye added to the polymer material is very high, typically in the order of hundredths of a percent, as a result of which it may be necessary for the dye to have to be added to the polymer material as a weight fraction equal to, for example, 0.70% ± 0.01%.

In fact, even a minimal deviation of the quantity of dye introduced into the polymer material which is being introduced into the transformation machine may lead to final products with relevant differences in terms of colouration which may bring about the rejection of the product owing to a lack of compliance with the quality specifications.

In order to better comply with the requirement to add a constant and predetermined quantity of dye, the additive is introduced into the polymer material by means of a metering pump, for example, a peristaltic pump, the operating principle of which ensures that a constant volume flow rate is supplied over time.

Nevertheless, the Applicant has observed how the variability of the colouration of the final articles often remains high so that the operator is often called upon to intervene manually in the regulation of the metering pump in order to increase or decrease the flow rate of additive supplied to the polymer material.

EP 0010743 B1 relates to a device for metered feeding of liquid crosslinking agents to the plastic base material provided in an extruder for the extrusion of plastic-insulated cables; the dosing system of such crosslinking agent is maintained at constant temperature.

US 2007/0248748 A1 discloses a plant for the introduction of a liquid, in particular a dielectric liquid or a peroxide, into a molten mass under pressure.

US 2,958,516 A1 concerns an apparatus for making synthetic resins, in particular PU resins, starting from liquid reactants.

### Statement of invention

The problem addressed by the present invention is to provide a plastics material transformation plant which is structurally and functionally configured to at least partially overcome the disadvantages identified above with reference to the cited prior art.

This problem is solved by the present invention by means of a plastics material transformation plant having the features to which the appended claims relate.

In particular, the present invention is directed towards a plastics material transformation plant according to claim 1 comprising a transformation machine which is provided to transform the plastics material by means of moulding or extrusion, a feeding hopper which is positioned upstream of the transformation machine in order to supply the plastics material to the transformation machine, and a metering device for liquid additives which is provided to add a liquid additive to the transformation machine.

According to the invention, the metering device comprises a container, in which the liquid additive is contained.

According to the invention, the metering device comprises a metering pump which is connected to the container in order to take the liquid additive and to supply it to the transformation machine.

According to the invention, the metering device comprises a thermo-regulation system of the liquid additive which is arranged to maintain the temperature of the liquid additive in a temperature range.

According to the invention, this temperature range spans from 2°C more to 2°C less than a predetermined temperature value.

As a result of these features, the liquid additive is added to the polymer material which is supplied to the transformation machine at a substantially constant temperature. This advantageously also allows the physical parameters of the liquid additive which depend on the temperature and in particular the density thereof to be kept substantially constant.

In this manner, it is ensured that the constancy of the volumetric flow rate, which is ensured by the metering pump, corresponds to a substantial constancy of the mass flow rate.

According to the invention, the thermo-regulation system is associated with the container in order to maintain the temperature of the liquid additive in the predetermined temperature range inside the container.

In this manner, the temperature of the liquid additive, as a result of the relevant mass involved, which is generally much higher than the one present in a portion of pipe, is subjected to abrupt oscillations to a lesser extent, making the control thereof generally simpler.

In an embodiment, the thermo-regulation system comprises an insulating coating which is provided around the container.

In this manner, the container and the additive contained therein is subjected to the external temperature and the variations thereof to a lesser extent.

According to the invention, the thermo-regulation system comprises a heating element, a temperature sensor and a controller which is associated with the temperature sensor and with the heating element, and the controller is provided to activate or deactivate the heating element in accordance with the temperature value detected by the temperature sensor.

Preferably, the heating element comprises an electrical resistance.

In a preferred embodiment, the thermo-regulation system comprises a thermal cover which is provided to be wrapped around the container which contains the liquid additive.

In this manner, the operation is far simpler and does not need any interventions at the container.

In another embodiment, the heating element is immersed in the liquid additive.

In this manner, the heat transfer is brought about in a more rapid manner. Preferably, the thermo-regulation system is provided to maintain the temperature of the liquid additive inside the container in a temperature range greater than the temperature of the environment in which the container is positioned.

In this manner, it is possible to configure the thermo-regulation system only for heating the liquid additive.

The predetermined temperature value (set temperature) will preferably be selected in accordance with the temperature of the environment, in which the metering device will be called upon to operate, and in particular it will preferably be greater by from 3 to 5°C than the maximum ambient temperature.

In a preferred embodiment, the temperature range within which there is provision for the temperature of the liquid additive to be able to fluctuate is approximately 1°C about the predetermined temperature value.

In this manner, by maintaining the temperature of the liquid additive within this range, it is ensured that the corresponding density variation of the liquid additive is substantially negligible.

In another embodiment, the temperature range within which there is provision for the temperature of the liquid additive to be able to fluctuate is approximately 5°C about the predetermined temperature value.

According to the invention, the liquid additive is a dye.

In an embodiment, the plastics material is supplied to the transformation machine in the form of granules.

According to the invention, the liquid additive is supplied from the metering device downstream of the feeding hopper and upstream of the transformation machine.

### Brief description of the drawings

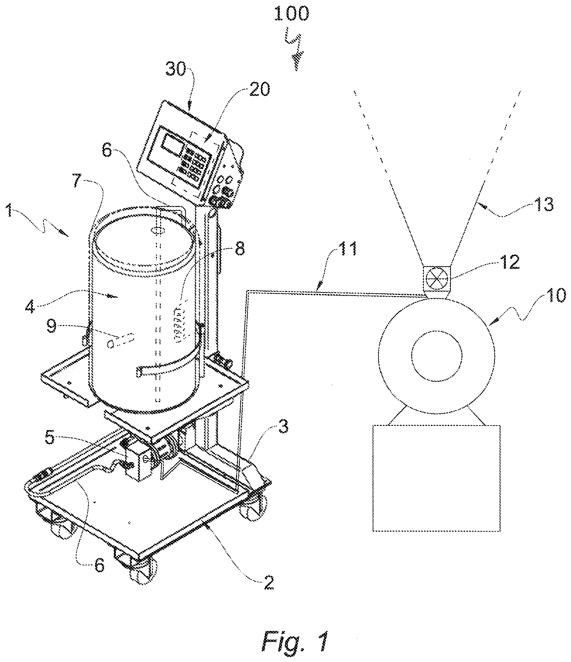

The features and advantages of the invention will be better appreciated from the detailed description of a preferred embodiment thereof in which Figure 1 is a schematic view of a plastics material transformation plant which is realised according to the present invention.

### Preferred embodiments of the invention

In the appended Figure, there is generally designated 100 a plastics material transformation plant which is realised according to the present invention.

In this preferred example, the transformation plant 100 is a moulding or extrusion plant for polymer material in granules of polyethylene terephthalate (PET) for producing bottle preforms.

However, the present invention may similarly be used in a moulding or extrusion plant which is supplied with any other thermoplastic polymer material, such as, for example, polypropylene, polyethylene, polyvinyl chloride, polyamide, etc.

The transformation plant 100 comprises:
- a transformation machine 10, for example, an extruder,
- a feeding hopper 13 which is positioned upstream of the transformation machine 10 and in which there is stored the polymer material which is intended to be transformed and which is provided to supply the granules of plastics material to the transformation machine 10, and
- a metering device 1 for liquid additives provided to add a liquid additive to the plastics material which is supplied to the transformation machine 10.

In particular, the metering device 1 supplies the liquid additive to the plastics material by means of a supply pipe 11 which is open, for example, in the region of a rotary valve 12 which is positioned between the outlet of the feeding hopper 13 and the inlet of the transformation machine 10.

The metering device 1 comprises a movable carriage 2, on the frame 3 of which there are positioned a container 4 comprising the liquid additive to be metered in the polymer material and a metering pump 5, the intake of which is connected to the inner side of the container 4 by means of a withdrawal pipe 6 and the delivery of which is connected to the supply pipe 11.

The metering pump 5 is preferably a peristaltic pump and, in the preferred example described herein, the liquid additive is a dye to be introduced into the polymer material in order to confer the desired colouration on the product which is obtained at the end of the processing thereof.

The metering device 1 further comprises a thermo-regulation system of the liquid additive which is contained in the container 4, which system is arranged to maintain the temperature of the liquid additive in a predetermined temperature range.

In a first embodiment of the invention, illustrated in Figure 1, the thermo-regulation system comprises an insulating coating 7 which is provided around the container 4, a heating element 8, a temperature sensor 9 and a controller 20.

The insulating coating 7 is formed, for example, by a layer of thermally insulating material having a suitable thickness, for example, between 1 and 5 cm. Examples of suitable thermally insulating materials comprise expanded polymers based on polyurethane or polystyrene, glass wool or mineral wool.

The heating element 8 is preferably an electrical resistance which is inserted in the container 4 so as to be immersed in the dye to be heated.

Similarly, the temperature sensor 9 is also inserted in the container 4 so as to detect the temperature of the dye.

The controller 20 is associated with the temperature sensor 9 and the heating element 8 and is provided to activate or deactivate the heating element in accordance with the temperature value which is detected by the temperature sensor 9.

In particular, the controller 20 is provided to maintain the internal temperature with respect to the container at a predetermined value (set temperature) which, for example, may be fixed at 30°C, with a margin of deviation of, for example, approximately 2 degrees centigrade.

The value of the set temperature is programmable by the operator and is preferably selected so as to be greater by a few degrees (for example, 5°C) than the mean temperature of the environment, in which the metering device 1 is positioned.

Similarly, the deviation margin from the set temperature is also programmable by the operator.

The controller 20 is preferably integrated in a control unit 30 of the metering device 1, preferably mounted on the movable carriage 2, which, in addition to the thermo-regulation system, is arranged to control and/or instruct other parameters or components of the metering device, such as, for example, the metering pump 5.

The provision of the thermo-regulation system allows the dye contained in the container 4 to be maintained at a controlled temperature which is within a predefined range centred on the set temperature.

In this manner, when the metering device 1 is in operation, the quantity of dye introduced into the polymer material remains constantly proportional to the volume thereof, which in turn depends only on the metering pump 5 and is therefore readily adjustable with optimum precision.

In a second embodiment of the invention, which is similarly preferred, the thermo-regulation system comprises a thermal cover which is wrapped around the container 4.

In this case, the heating element is encased inside the insulating material of the thermal cover and the temperature sensor can be external with respect to the container, integrated in the thermal cover.

The thermal cover may be connected to the controller 20 or may have an independent control unit.

In additional construction variants of the invention, there is provision for the thermo-regulation system to comprise a heating base, on which the container 4 is supported, and/or for the thermal cover not to be in direct contact with the container, but to be arranged on a suitable frame which is mounted around the container so as to form a heated chamber around the container.

The present invention therefore allows a substantial reduction in the need for manual interventions by the operator in order to regulate the quantity of dye which is introduced into the polymer material and a reduction of the quantity of products rejected as a result of discrepancies in relation to the colouration.

## Claims

1. A plastics material transformation plant (100) comprising :
- a transformation machine (10) which is provided to transform the plastics material by means of moulding or extrusion,
- a feeding hopper (13) which is positioned upstream of the transformation machine in order to supply the plastics material to the transformation machine, and
- a metering device (1) for liquid additives which is provided to add a liquid additive to the transformation machine,
the metering device (1) comprising:
- a container (4) in which the liquid additive is contained,
- a metering pump (5) which is connected to the container in order to take the liquid additive and to supply it to the transformation machine (10),
and **characterized in that**
- the metering device comprises a thermo-regulation system of the liquid additive which is arranged to maintain the temperature of the liquid additive in a range of 2°C more or 2°C less than a predetermined temperature value,
- the thermo-regulation system is associated with the container (4) in order to maintain the temperature of the liquid additive in the predetermined temperature range inside the container (4),
- the thermo-regulation system comprises a heating element (8), a temperature sensor (9) and a controller (20) which is associated with the temperature sensor (9) and with the heating element (8) in order to activate or deactivate the heating element (8) in accordance with the temperature value detected by the temperature sensor (9), and **in that**
- the liquid additive is a dye.

2. A plant according to claim 1, wherein the thermo-regulation system comprises an insulating coating (7) which is provided around the container (4).

3. A plant according to claim 2, wherein the heating element (8) comprises an electrical resistance.

4. A plant according to any one of the preceding claims, wherein the heating element (8) is immersed in the liquid additive.

5. A plant according to any one of the preceding claims, wherein the thermo-regulation system comprises a thermal cover which is provided to be wrapped around the container (4).

6. A plant according to any one of claims 1 to 5, wherein the thermo-regulation system is provided to maintain the temperature of the liquid additive inside the container (4) in a temperature range which is approximately from 3 to 5°C greater than the temperature of the environment in which the container (4) is positioned.

## Patentansprüche

1. Anlage zur Umformung von Kunststoffen (100), umfassend:
- eine Umformmaschine (10), die vorgesehen ist, um das Kunststoffmaterial durch Formen oder Extrudieren umzuformen,
- einen Zuführtrichter (13), der stromaufwärts der Umformmaschine angeordnet ist, um das Kunststoffmaterial der Umformmaschine zuzuführen, und
- eine Dosiereinrichtung (1) für flüssige Zusatzstoffe, die vorgesehen ist, um der Umformmaschine einen flüssigen Zusatzstoff zuzugeben,
- wobei die Dosiervorrichtung (1) aufweist:
- einen Behälter (4), in dem der flüssige Zusatzstoff enthalten ist,
- eine Dosierpumpe (5), die mit dem Behälter verbunden ist, um den flüssigen Zusatzstoff aufzunehmen und der Umformmaschine (10) zuzuführen,
- und **dadurch gekennzeichnet, dass**
- die Dosiervorrichtung ein Thermoregulierungssystem des flüssigen Zusatzstoffs aufweist, das angeordnet ist, um die Temperatur des flüssigen Zusatzstoffs in einem Bereich von 2°C über oder 2°C unter einem vorbestimmten Temperaturwert zu halten,
- das Thermoregulierungssystem mit dem Behälter (4) verbunden ist, um die Temperatur des flüssigen Zusatzstoffs im vorgegebenen Temperaturbereich innerhalb des Behälters (4) zu halten,
- das Thermoregulierungssystem ein Heizelement (8), einen Temperatursensor (9) und eine dem Temperatursensor (9) und dem Heizelement (8) zugeordnete Steuerung (20) aufweist, um das Heizelement (8) in Übereinstimmung mit dem vom Temperatursensor (9) erfassten Temperaturwert zu aktivieren oder zu deaktivieren, und dadurch, dass
- der flüssige Zusatzstoff ein Farbstoff ist.

2. Anlage nach Anspruch 1, wobei das Thermoregulierungssystem eine Isolierschicht (7) aufweist, die um den Behälter (4) herum vorgesehen ist.

3. Anlage nach Anspruch 2, wobei das Heizelement (8) einen elektrischen Widerstand aufweist.

4. Anlage nach einem der vorhergehenden Ansprüche, wobei das Heizelement (8) in den flüssigen Zusatzstoff eingetaucht ist.

5. Anlage nach einem der vorhergehenden Ansprüche, wobei das Thermoregulierungssystem eine thermische Abdeckung aufweist, die vorgesehen ist, um um den Behälter (4) gewickelt zu werden.

6. Anlage nach einem der Ansprüche 1 bis 5, wobei das Thermoregulierungssystem vorgesehen ist, um die Temperatur des flüssigen Zusatzstoffs innerhalb des Behälters (4) in einem Temperaturbereich zu halten, der etwa 3 bis 5°C höher als die Temperatur der Umgebung ist, in der der Behälter (4) positioniert ist.

## Revendications

1. Installation de transformation de matière plastique (100), comprenant :
- une machine de transformation (10) qui est prévue pour transformer la matière plastique au moyen d'un moulage ou d'une extrusion,
- une trémie d'alimentation (13) qui est placée en amont de la machine de transformation afin d'alimenter la machine de transformation en la matière plastique, et
- un dispositif de dosage (1) d'additifs liquides qui est prévu pour ajouter un additif liquide à la machine de transformation,
le dispositif de dosage (1) comprenant :
- un contenant (4) dans lequel est contenu l'additif liquide,
- une pompe de dosage (5) qui est raccordée au contenant afin de prélever l'additif liquide et de le fournir à la machine de transformation (10),
et **caractérisée en ce que**
- le dispositif de dosage comprend un système de thermorégulation de l'additif liquide qui est conçu pour maintenir la température de l'additif liquide dans une plage de plus 2 °C ou moins 2 °C d'une valeur de température prédéterminée,
- le système de thermorégulation est associé au contenant (4) afin de maintenir la température de l'additif liquide dans la plage de température prédéterminée à l'intérieur du contenant (4),
- le système de thermorégulation comprend un élément chauffant (8), un capteur de température (9) et un dispositif de commande (20) qui est associé au capteur de température (9) et à l'élément chauffant (8) afin d'activer ou de désactiver l'élément chauffant (8) conformément à la valeur de température détectée par le capteur de température (9), et ce que
- l'additif liquide est un colorant.

2. Installation selon la revendication 1, dans laquelle le système de thermorégulation comprend un revêtement isolant (7) qui est disposé autour du contenant (4) .

3. Installation selon la revendication 2, dans laquelle l'élément chauffant (8) comprend une résistance électrique.

4. Installation selon l'une quelconque des revendications précédentes, dans laquelle l'élément chauffant (8) est immergé dans l'additif liquide.

5. Installation selon l'une quelconque des revendications précédentes, dans laquelle le système de thermorégulation comprend un revêtement thermique qui est conçu pour envelopper le contenant (4).

6. Installation selon l'une quelconque des revendications 1 à 5, dans laquelle le système de thermorégulation est prévu pour maintenir la température de l'additif liquide à l'intérieur du contenant (4) dans une plage de température qui est environ de 3 à 5 °C supérieure à la température de l'environnement dans lequel est placé le contenant (4).
